# EUROPÄISCHE PATENTSCHRIFT

(11) **EP 2 356 174 B1**
(45) Veröffentlichungstag und Bekanntmachung des Hinweises auf die Patenterteilung: **19.09.2012**
(21) Anmeldenummer: 09748309.3
(22) Anmeldetag: 29.10.2009
(51) Int. Cl.: C08K 3/16, C08K 5/098, C08K 5/20, C08L 77/00

(54) **STABILISIERTE POLYAMIDE**
STABILIZED POLYAMIDES
POLYAMIDE STABILISÉ

(30) Priorität: 11.11.2008 EP 08168798
(43) Veröffentlichungstag der Anmeldung: 17.08.2011
(73) Patentinhaber: BASF SE, 67056 Ludwigshafen (DE)
(72) Erfinder: DESBOIS, Philippe, 68535 Edingen-Neckarhausen (DE); KLATT, Martin, 68165 Mannheim (DE); JAIN, Sachin, 68165 Mannheim (DE)
(86) Internationale Anmeldenummer: PCT/EP2009/064250
(87) Internationale Veröffentlichungsnummer: WO 2010/054933

(56) Entgegenhaltungen:
- DE-A1-102005 005 847

## Beschreibung

Die Erfindung betrifft thermoplastische Formmassen, enthaltend
A) 10 bis 98,7 Gew.-% mindestens eines thermoplastischen Polyamids mit einer Viskositätszahl (VZ) gemäß ISO 307 von mindestens 150 ml/g,
B) 1 ppm bis 0,95 Gew.-% mindestens eines Polyethyleniminhomo- oder - copolymerisates,
C) 0,05 bis 3 Gew.-% eines Schmiermittels,
D) 0,05 bis 3 Gew.-% eines kupferhaltigen Stabilisators
E) 1 bis 50 Gew.-% oder eines faser- oder teilchenförmigen Füllstoffes oder deren Mischungen,
F) 0,05 bis 5 Gew.-% eines Nigrosins.
G) 0 bis 30 Gew.-% weiterer Zusatzstoffe,
wobei die Summe der Komponenten A) bis G) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper, insbesondere Ansaugrohre (Ansaugkrümmer) für den Fahrzeugbereich.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Aus dem Kunststoff Handbuch 3. Technische Thermoplaste, 4. Polyamide, 1998 Carl Hanser Verlag München Wien, Herausgeber L. Bottenbruch, R. Binsack ist die Verwendung von verschiedenen Wärmestabilisatoren bei Polyamiden bekannt.

Der Einsatz von hyperverzweigten Polyethyleniminen in thermoplastischen Polymeren ist z.B. aus DE-A 10030553 bekannt. Beispiele sind dort nur für unverstärkte Polyoxymethylen Formmassen angegeben, wobei die Dieselkraftstoffbeständigkeit verbessert wird.

Aus der EP-A 1065236 sind unverstärkte Polyamide bekannt, bei denen Polyethylenimine und Oligocarbonsäuren während der Polymerisation eingesetzt werden. Die beschriebenen Formmassen weisen eine verbesserte Lösemittelbeständigkeit auf, die WAB ist jedoch verbesserungswürdig.

Aus der DE 102005005847 sind stabilisierte Polyamide bekannt, welche Polyethylenimine und Stabilisatoren enthalten. Die Bindenahtfestigkeit der Formmassen ist jedoch verbesserungswürdig.

Aufgabe der vorliegenden Erfindung war es daher, stabilisierte Polyamidformmassen zur Verfügung zu stellen, die eine erhöhte thermische Stabilität und eine bessere Bindenahtfestigkeit aufweisen. Die Verarbeitungseigenschaften sollen ebenfalls verbessert werden.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 98,7, vorzugsweise 20 bis 89,6 und insbesondere 30 bis 85 Gew.-% mindestens eines Polyamides.

Die Polyamide der erfindungsgemäßen Formmassen weisen eine Viskositätszahl von mindestens 150, bevorzugt mindestens 180, vorzugsweise 190 bis 350 ml/g auf, bestimmt in einer 0,5 gew.%-igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA MXD6: m-Xylylendiamin, Adipinsäure

### AA/BB-Polymere

- PA 6l: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 61/6T: (siehe PA 61 und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Die thermoplastischen Formmassen enthalten als Komponente B) erfindungsgemäß 1 ppm bis 0,95 Gew.-% mindestes eines Polyethylenimin-Homopolymerisats oder - Copolymerisates. Bevorzugt beträgt der Anteil von B) 0,01 bis 0,8 Gew.-% und insbesondere 0,1 bis 0,6 Gew.-% bezogen auf A) bis G), wobei verzweigte Polyethylenimine bevorzugt sind.

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im Allgemeinen durch Polymerisation von Ethylenimin (Aziridin) in wäßriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im allgemeinen mittels ¹³C-NMR Spektroskopie bestimmt werden. Diese beträgt vorzugsweise1/0,7-1,4/0,3-1,1 bis 1/0,8-1,3/0,5-0,9.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 500 bis 2.000.000 auf (bestimmt mittels Lichtstreuung). Das bevorzugte M_{w} beträgt von 700 bis 1.500.000, insbesondere von 1.000 bis 500.000.

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Als Komponente C) enthalten die erfindungsgemäßen Formmassen 0,05 bis 3, vorzugsweise 0,1 bis 1,5 und insbesondere 0,1 bis 1 Gew.-% eines Schmiermittels.

Bevorzugt sind AI-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente D) enthalten die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als faser- oder teilchenförmige Füllstoffe E) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 1 bis 40, vorzugsweise 10 bis 90 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(C-CmH₂ₘ₊₁)₄₋ₖ

in der die Substituenten folgende Bedeutung haben:
- X: NH₂-, 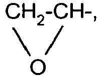 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 % . Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente F) enthalten die erfindungsgemäßen Formmassen 0,05 bis 5, vorzugsweise 0,1 bis 2 und insbesondere 0,25 bis 1 Gew.-% eines Nigrosins.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente F) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente G) können die erfindungsgemäßen Formmassen 0 bis 30, insbesondere bis zu 20 Gew.-% weiterer Zusatzstoffe und Verarbeitungshilfsmittel enthalten.

Weitere übliche Zusatzstoffe G) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

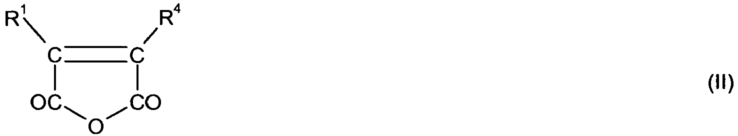

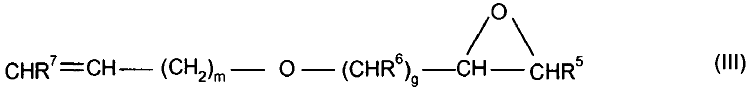

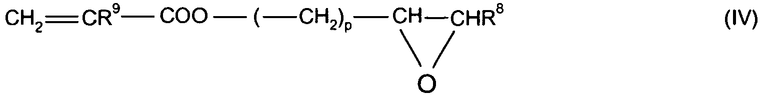

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidylmethacrylat, (Meth)acrylsäure und/oder Maleinsäureanhydrid, und
- 1 bis 45,: insbesondere 5 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 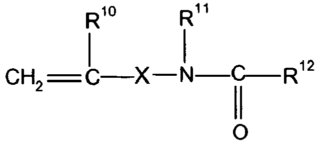 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 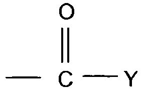
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente G) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis F) sowie gegebenenfalls G) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte Bindenahtfestigkeit und thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:

### Komponente A:

Polyamid 6 (Polycaprolactam) mit einer Viskositätszahl VZ von 200 ml/g, gemessen als 0,5 gew.-%ige Lösung in 96 gew.-%iger Schwefelsäure bei 25°C nach ISO 307. (Es wurde Ultramid® der BASF SE verwendet).

### B) Polyethylenimine

**Tabelle 1**

| Lupasol® | G20 | G100 | WF | SK |
|---|---|---|---|---|
| M_{w} | 1 300 | 5000 | 25 000 | 2 000 000 |
| Prim/sek/tert Amine | 1/0,91/0,64 | 1/1,05/0,76 | 1/1,20/0,76 | 1/1,16/1,19 |

| | | | | |
|---|---|---|---|---|
| Lupasol® =̂ eingetragene Marke der BASF SE | | | | |

Das Verhältnis primär/sekundär/tertiäre Amine wurde mittels ¹³C-NMR-Spektroskopie bestimmt.
C) Calciummontanat
D) CuJ/KJ im Verhältnis 1:4 (80 %iger Batch in PA 6)
E) Glasfasern
F) Nigrosin (Nigrosin SA PL der Firma Orient Chemical)

Die Formmassen wurden auf einer ZSK 40 bei einem Durchsatz von 50 kg/h und ca. 260°C flachem Temperaturprofil hergestellt.

Die Komponenten B) wurden (s. Tabelle) entweder in Zone 0, 5 oder 3 zudosiert.

Es wurden folgende Messungen durchgeführt:
Zugversuch nach ISO 527, Mechanikkennwerte vor und nach Wärmelagerung 200°C im Umluftofen
VZ: c = 5 g/l in 96 %iger Schwefelsäure, nach ISO 307
MVR: 275°C, 5 kg, 4 min, nach ISO 1133
Fließspirale: 280°C/70°C, 1000 bar, 2 mm.

Zur Prüfung der Bindenahtfestigkeit wurden ein Zugversuch (ISO 527-2) und ein Biegeversuch nach Vibrationsschweißen durchgeführt und nach 300 h, 500 h und 1000 h Wärmelagerung bei 180°C:

| Probekörper | |
|---|---|
| Werkzeug | Platten P10/4,0 (110 mm x 110 mm x 4 mm) |
| Fügefläche | 440 mm² |
| Konditionierung vor | |
| Schweißen | - Trocknen: 80°C/24 h, Vakuum |
| Prüfung | - Trocknen: 80°C/24 h, Vakuum |

| Schweißversuche | |
|---|---|
| Schweißung | linear, Stumpfstoß, typgleich |
| Schweißweg | 1,5 mm |
| Schweißung pro Einstellung | 8 |

| Maschinendaten | |
|---|---|
| Vibrationsschweißmaschine | Branson (Typ M-102 H) |
| Schweißfrequenz | ca. 240 Hz |
| Schweißung | linear |
| Schweißdruck | ca. 1,6 MPa |
| Amplitude | 0,9mm |

Die Ergebnisse der Prüfungen und Zusammensetzungen der Formmassen sind in den Tabellen 2 bis 5 aufgeführt.

**Tabelle 2:**

| | Komponente A [Gew.-%] | Komponente B | Komponente B [Gew.-%] | Komponente C [Gew.-%] | Komponente D [Gew.-%] | Komponente E [Gew.-%] | Komponente F [Gew.-%] |
|---|---|---|---|---|---|---|---|
| Vgl. 1 | 67,65 | - | 0 | 0,2 | 0,7 | 30 | 0,75 |
| Vgl. 2 | 67,15 | SK | 0,5 Zone 5 | 0,2 | 0,7 | 30 | 0,75 |
| Vgl. 3 | 66,65 | G20 | 1,0 Zone 5 | 0,2 | 0,7 | 30 | 0,75 |
| Beis. 1 | 67,85 | G20 | 0,5 Zone 5 | 0,2 | 0,7 | 30 | 0,75 |
| Beis. 2 | 67,85 | G100 | 0,5 Zone 5 | 0,2 | 0,7 | 30 | 0,75 |
| Beis. 3 | 67,85 | WF | 0,5 Zone 5 | 0,2 | 0,7 | 30 | 0,75 |
| Beis. 4 | 67,15 | G20 | 0,5 Zone 5 | 0,2 | 1,4 | 30 | 0,75 |
| Beis. 5 | 67,15 | G20 | 0,5 Zone 0 | 0,2 | 1,4 | 30 | 0,75 |
| Beis. 6 | 67,15 | G20 | 0,5 Zone 3 | 0,2 | 1,4 | 30 | 0,75 |

**Tabelle 3:**

| | VZ [ml/g] | | | | | Fließspirale [cm] | MVR [ml/10 min] |
|---|---|---|---|---|---|---|---|
| | Nach | Nach | 500 h | 1000 h | 300 h | | |
| | Komp. | Schweißen | 160°C | 160°C | 180°C | | |
| Vgl. 1 | 202 | - | - | - | - | 24 | 17 |
| Vgl. 2 | 194 | 180 | 262 | 293 | - | 26 | 21 |
| Vgl. 3 | 159 | 127 | 202 | 162 | 166 | 46 | 74 |
| Beis. 1 | 170 | 151 | 188 | 204 | 232 | 38 | 31 |
| Beis. 2 | 185 | 169 | 238 | 252 | 298 | 33 | 31 |
| Beis. 3 | 194 | 175 | 240 | - | 304 | 32 | 26 |
| Beis. 4 | 170 | 147 | 185 | 200 | 209 | 39 | 50 |
| Beis. 5 | 171 | 131 | 183 | 196 | 199 | 40 | 47 |
| Beis. 6 | 185 | 169 | 238 | 252 | 298 | 33 | 31 |

**Tabelle 4:**

| | Schlagzähigkeit ungekerbt [kJ/m2] | Reißdehnung [%] | E-Modul [GPa] | Streck-Spannung [MPa] |
|---|---|---|---|---|
| Vgl. 1 | - | - | - | - |
| Vgl. 2 | 95 | 3,4 | 9700 | 173 |
| Vgl. 3 | 78 | 3,1 | 9590 | 171 |
| Beis. 1 | 81 | 3,1 | 10020 | 175 |
| Beis. 2 | 82 | 3,3 | 9540 | 172 |
| Beis. 3 | 92 | 3,3 | 9940 | 175 |
| Beis. 4 | 82 | 3,4 | 9630 | 174 |
| Beis. 5 | 85 | 3,2 | 9740 | 175 |
| Beis. 6 | 76 | 3,2 | 9680 | 174 |

**Tabelle 5:**

| | Bindenahtfestigkeit [MPa] | | | | Biegfestigkeit [MPa] | | | |
|---|---|---|---|---|---|---|---|---|
| | 0 | 500 h | 1000 h | 300 h | 0 | 500 h | 1000 h | 300 h |
| | | 160°C | 160°C | 180°C | | 160°C | 160°C | 180°C |
| Vgl. 1 | - | - | - | - | - | - | - | - |
| Vgl. 2 | 91 | 61 | 70 | 59 | 178 | 131 | 115 | 166 |
| Vgl. 3 | 71 | 63 | 62 | 66 | 120 | 118 | 115 | 130 |
| Beis. 1 | 80 | 52 | 67 | 72 | 142 | 123 | 136 | 135 |
| Beis. 2 | 93 | 60 | 76 | 72 | 179 | 129 | 154 | 160 |
| Beis. 3 | 93 | 55 | 63 | 63 | 178 | 119 | 157 | 159 |
| Beis. 4 | 76 | 51 | 59 | 70 | 133 | - | 111 | 122 |
| Beis. 5 | 84 | 56 | 63 | 72 | 150 | 120 | 124 | 136 |
| Beis. 6 | 83 | 56 | 61 | 72 | 146 | 114 | 110 | 131 |

## Patentansprüche

1. Thermoplastische Formmassen, enthaltend
A) 10 bis 98,7 Gew.% mindestens eines thermoplastischen Polyamids mit einer Viskositätszahl (VZ) gemäß ISO 307 von mindestens 150 ml/g,
B) 1 ppm bis 0,95 Gew.-% mindestens eines verzweigten Polyethyleniminpolymerisates, mit einem Verhältnis von primären/sekundären/tertiären Aminen von 1/0,7-1,4/0,3-1,1/ bis 1/0,8-1,3/0,5-0,9.
C) 0,05 bis 3 Gew.-% eines Schmiermittels,
D) 0,05 bis 3 Gew.-% eines kupferhaltigen Stabilisators
E) 1 bi 50 Gew.-% oder eines faser- oder teilchenförmigen Füllstoffes oder deren Mischungen,
F) 0,1 bis 5 Gew.-% eines Nigrosins.
G) 0 bis 30 Gew.-% weiterer Zusatzstoffe,
wobei die Summe der der Komponenten A) bis G) 100 % ergibt.

2. Thermoplastische Formmassen nach Anspruch 1, in denen die Komponente B) ein Molekulargewicht (M_{w}) von 100 bis 3.000.000 aufweist.

3. Thermoplastische Formmassen nach den Ansprüchen 1 oder 2, in denen die Komponente C) aus Al- oder Alkali- oder Erdalkalisalzen oder Ester oder Amiden von Fettsäuren mit 10 bis 44 C-Atomen aufgebaut ist.

4. Thermoplastische Formmassen nach den Ansprüchen 1 bis 3, in denen die Komponente C) aus Calciumsalzen von Fettsäuren mit 10 bis 44 C-Atomen aufgebaut ist

5. Thermoplastische Formmassen nach den Ansprüchen 1 bis 4, in denen der kupferhaltige Stabilisator D) ein Cu-Halogenid ist.

6. Thermoplastische Formmassen nach den Ansprüchen 1 bis 5, in denen D) aus Cul : KJ im Verhältnis 1 : 4 aufgebaut ist

7. Verwendung der thermoplastischen Formmassen gemäß den Ansprüchen 1 bis 6 zur Herstellung von Fasern, Folien und Formkörpern jeglicher Art.

8. Fasern Folien und Formkörper jeglicher Art erhältlich aus den thermoplastischen Formmassen gemäß den Ansprüchen 1 bis 6.

9. Formkörper nach Anspruch 8, welche als Ansaugrohre (Ansaugkrummer) im Fahrzeugbereich eingesetzt werden.

## Claims

1. A thermoplastic molding composition comprising
A) from 10 to 98.7% by weight of at least one thermoplastic polyamide having a viscosity number (VN) to ISO 307 of at least 150 ml/g,
B) from 1 ppm to 0.95% by weight of at least one branched polyethyleneimine polymer having a ratio of primary/secondary/tertiary amines of from 1/0.7-1.4/ 0.3-1.1 to 1/0.8-1.3/0.5-0.9,
C) from 0.05 to 3% by weight of a lubricant,
D) from 0.05 to 3% by weight of a copper-containing stabilizer,
E) from 1 to 50% by weight of a fibrous or particulate filler, or mixtures thereof,
F) from 0.1 to 5% by weight of a nigrosine,
G) from 0 to 30% by weight of further additives,
the sum of components A) to G) adding up to 100%.

2. The thermoplastic molding composition according to claim 1, in which component B) has a molecular weight (M_{w}) of from 100 to 3 000 000.

3. The thermoplastic molding composition according to claims 1 or 2, in which component C) is composed of aluminum salts, alkali metal salts, alkaline earth metal salts, esters or amides of fatty acids having from 10 to 44 carbon atoms.

4. The thermoplastic molding composition according to claims 1 to 3, in which component C) is composed of calcium salts of fatty acids having from 10 to 44 carbon atoms.

5. The thermoplastic molding composition according to claims 1 to 4, in which the copper-containing stabilizer D) is a copper halide.

6. The thermoplastic molding composition according to claims 1 to 5, in which D) is composed of CuI : KI in a ratio of 1:4.

7. The use of the thermoplastic molding compositions according to claims 1 to 6 for producing fibers, films and moldings of any type.

8. A fiber, film or molding of any type, obtainable from the thermoplastic molding compositions according to claims 1 to 6.

9. The molding according to claim 8, which is used as an intake tube (intake manifold) in the vehicles sector.

## Revendications

1. Masses de moulage thermoplastiques, contenant
A) 10 à 98,7% en poids d'au moins un polyamide thermoplastique présentant un indice de viscosité (IV) selon la norme ISO 307 d'au moins 150 ml/g,
B) 1 ppm à 0,95% en poids d'au moins un polymère ramifié de polyéthylène-imine, présentant un rapport d'amines primaires/secondaires/tertiaires de 1/0,7-1,4/0,3-1,1/ à 1/0,8-1,3/0,5-0,9,
C) 0,05 à 3% en poids d'un lubrifiant,
D) 0,05 à 3% en poids d'un stabilisateur contenant du cuivre
E) 1 à 50% en poids d'une charge sous forme de fibres ou de particules ou leurs mélanges,
F) 0,1 à 5% en poids d'une ligroïne,
G) 0 à 30% en poids d'autres additifs,
la somme des composants A) à G) valant 100% en poids.

2. Masses de moulage thermoplastiques selon la revendication 1, dans lesquelles le composant B) présente un poids moléculaire (M_{w}) de 100 à 3 000 000.

3. Masses de moulage thermoplastiques selon les revendications 1 ou 2, dans lesquelles le composant C) est formé de sels d'aluminium ou de métal alcalin ou de métal alcalino-terreux ou d'esters ou d'amides d'acides gras comprenant 10 à 44 atomes de carbone.

4. Masses de moulage thermoplastiques selon les revendications 1 à 3, dans lesquelles le composant C) est formé de sels de calcium d'acides gras comprenant 10 à 44 atomes de carbone.

5. Masses de moulage thermoplastiques selon les revendications 1 à 4, dans lesquelles le stabilisateur contenant du cuivre D) est un halogénure de Cu.

6. Masses de moulage thermoplastiques selon les revendications 1 à 5, dans lesquelles D) est formé de CuI:KI dans un rapport 1:4.

7. Utilisation des masses de moulage thermoplastiques selon les revendications 1 à 6 pour la production de fibres, de feuilles et de corps moulés de tous types.

8. Fibres, feuilles et corps moulés de tous types pouvant être obtenus à partir des masses de moulage thermoplastiques selon les revendications 1 à 6.

9. Corps moulés selon la revendication 8 qui sont utilisés comme tubes d'aspiration (coudes d'aspiration) dans le domaine des véhicules.
